# EUROPEAN PATENT APPLICATION

(11) **EP 3 572 324 A1**
(43) Date of publication of application: **27.11.2019**
(21) Application number: 19175576.8
(22) Date of filing: 21.05.2019
(51) Int. Cl.: B64D 11/06, B60N 2/42

(54) **COLLAPSIBLE STRUCTURE WITH VARYING STIFFNESS-BASED ENERGY ATTENUATION SYSTEM**

(30) Priority: 22.05.2018 IN 201811019131
(71) Applicant: AMI Industries, Inc., Colorado Springs, CO 80916 (US)
(72) Inventor: RAO, Sreekanth Koti Ananda, 560061 Karnataka (IN); HOSMANI, Mahesh Virupaxi, 560102 Karnataka (IN); PANDA, Satya Swaroop, 560037 Karnataka (IN); JATHAVEDAN, Krishnakumar Vadakkedathu, 560103 Karnataka (IN)
(74) Representative: Dehns

(57) **Abstract**

A collapsible structure (20) is provided and includes a hub (30), an exterior skin (40) surrounding the hub (30) and a plurality of spokes (50) extending outwardly from the hub (30) to the exterior skin (40). Each spoke (50) is tapered along a length thereby providing varying stiffness based energy attenuation capabilities.

## Description

### CROSS-REFERENCE TO RELATED APPLICATIONS

This application claims the benefit of Indian Patent Application No. 201811019131, filed May 22, 2018, which is incorporated herein by reference in its entirety.

### BACKGROUND

The following description relates to a collapsible structure and, more particularly, to a collapsible structure with varying stiffness-based energy attenuation system.

Currently, certain helicopter seating systems employ fixed profile energy attenuation systems. Energy attenuation capabilities of such fixed profile energy attenuation systems is achieved by wire bending actions to provide for a variation in load with stroke. Wire bending uses forces required to bend a metallic wire, which has a rectangular and varying cross section, and to draw it through offset rollers to provide for the load variation.

Performance characteristics of energy attenuation systems that make use of wire bending tend to vary depending on uncertainties in wire material properties, taper angles and surface finishes. In addition, stroke length required to attenuate the energy is relatively high (e.g., approximately 8" for a 95th Percentile occupant size).

### BRIEF DESCRIPTION

According to an aspect of the disclosure, a collapsible structure is provided and includes a hub, an exterior skin surrounding the hub and a plurality of spokes extending outwardly from the hub to the exterior skin, each spoke being tapered along a length thereof.

In accordance with additional or alternative embodiments, the hub, the exterior skin and the plurality of spokes are symmetric about a central longitudinal axis of the hub.

In accordance with additional or alternative embodiments, each spoke is uniformly distant from neighboring spokes about the hub.

In accordance with additional or alternative embodiments, the exterior skin is polygonal with each vertex being connected to a spoke.

In accordance with additional or alternative embodiments, the hub is an elongate hub with a first end and a second end opposite the first end, the exterior skin is an elongate exterior skin with first and second ends corresponding to the first and second ends of the elongate hub and each spoke is tapered along respective lengths of the elongate hub and the elongate exterior skin.

In accordance with additional or alternative embodiments, the tapering of each spoke is uniform along the respective lengths of the elongate hub and the elongate exterior skin.

In accordance with additional or alternative embodiments, each spoke is thickest at the respective first ends of the elongate hub and the elongate exterior skin and each spoke is thinnest at the respective second ends of the elongate hub and the elongate exterior skin.

In accordance with additional or alternative embodiments, each spoke has a thickness of about 0.1 inches (2.54 mm) at the respective first ends of the elongate hub and the elongate exterior skin and each spoke has a thickness of about 0.06 inches (1.524 mm) at the respective second ends of the elongate hub and the elongate exterior skin.

According to another aspect of the disclosure, an energy attenuation system is provided and includes a housing, a crusher element, rivets disposed to support the crusher element within the housing and at least one collapsible structure. The at least one collapsible structure is disposed to deformably support the crusher element within the housing following failures of the rivets. The at least one collapsible structure is configured to collapse at successive longitudinal portions in response to correspondingly successive compressive forces applied by the crusher element following the failures of the rivets.

According to yet another aspect of the disclosure, an energy attenuation system is provided and includes a housing, a crusher element, rivets disposed to support the crusher element within the housing and at least one collapsible structure. The at least one collapsible structure is disposed to deformably support the crusher element within the housing following failures of the rivets. The at least one collapsible structure includes a hub, an exterior skin surrounding the hub and a plurality of spokes extending outwardly from the hub to the exterior skin, each spoke being tapered along a length thereof.

In accordance with additional or alternative embodiments, the housing includes an aircraft housing, the crusher element includes a seat and failures of the rivets occur in an event a body in the seat experiences an acceleration of about 13-14.5 Gs.

In accordance with additional or alternative embodiments, the at least one collapsible structure is a single use feature.

In accordance with additional or alternative embodiments, the at least one collapsible structure includes multiple collapsible structures at corners of the seat.

In accordance with additional or alternative embodiments, the hub, the exterior skin and the plurality of spokes are symmetric about a central longitudinal axis of the hub.

In accordance with additional or alternative embodiments, each spoke is uniformly distant from neighboring spokes about the hub.

In accordance with additional or alternative embodiments, the exterior skin is polygonal with each vertex being connected to a spoke.

In accordance with additional or alternative embodiments, the hub is an elongate hub with a first end proximate to the housing and a second end opposite the first end and proximate to the crusher element, the exterior skin is an elongate exterior skin with first and second ends corresponding to the first and second ends of the elongate hub and each spoke is tapered along respective lengths of the elongate hub and the elongate exterior skin.

In accordance with additional or alternative embodiments, the tapering of each spoke is uniform along the respective lengths of the elongate hub and the elongate exterior skin.

In accordance with additional or alternative embodiments, each spoke is thickest at the respective first ends of the elongate hub and the elongate exterior skin and each spoke is thinnest at the respective second ends of the elongate hub and the elongate exterior skin.

In accordance with additional or alternative embodiments, each spoke has a thickness of about 0.1 inches (2.54 mm) at the respective first ends of the elongate hub and the elongate exterior skin and each spoke has a thickness of about 0.06 inches (1.524 mm) at the respective second ends of the elongate hub and the elongate exterior skin.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features and advantages of the disclosure are apparent from the following detailed description taken in conjunction with the accompanying drawings in which:
FIG. 1 is a perspective view of an energy attenuation system in accordance with embodiments;
FIG. 2 is a top-down view of collapsible structures of the energy attenuation system of FIG. 1;
FIG. 3 is a side view of a collapsible structure of the energy attenuation system of FIG. 1;
FIG. 4 is an axial view of the collapsible structure of FIG. 3 taken along line 4-4;
FIG. 5 is an axial view of the collapsible structure of FIG. 3 taken along line 5-5; and
FIG. 6 is a side view of an image of a deformable collapse of a collapsible structure in accordance with embodiments.

These and other advantages and features will become more apparent from the following description taken in conjunction with the drawings.

### DETAILED DESCRIPTION

As will be described below, an energy attenuation system is provided that is operable based on performance of a collapsible structure with varying stiffness and can be used in helicopter seating systems for example. The collapsible structure of the energy attenuation system absorbs input kinetic energy by successive buckling or crushing due to axial compression. The varying stiffness along its length will assist in achieving variable energy absorption for various occupants ranging from those in the 5th percentile occupant size to those in the 95th percentile.

In an operation of the energy attenuation system, once the occupant or the seat the occupant is sitting in reaches an acceleration of about 13-14.5 Gs, rivets that normally hold or prevent crusher movement are sheared and thus allow for the crusher element to start stroking on the collapsible structure whereby the crusher element applies an axial compression load onto the collapsible structure. Impact kinetic energy is thus utilized to deform the collapsible structure as the impact kinetic energy is converted into strain energy. The strain energy of the collapsible structure may be expressed as U = 1/2(V σ ∈), where, V = a volume of the collapsible structure, σ = an applied compressive stress, ∈ = strain in the collapsible structure.

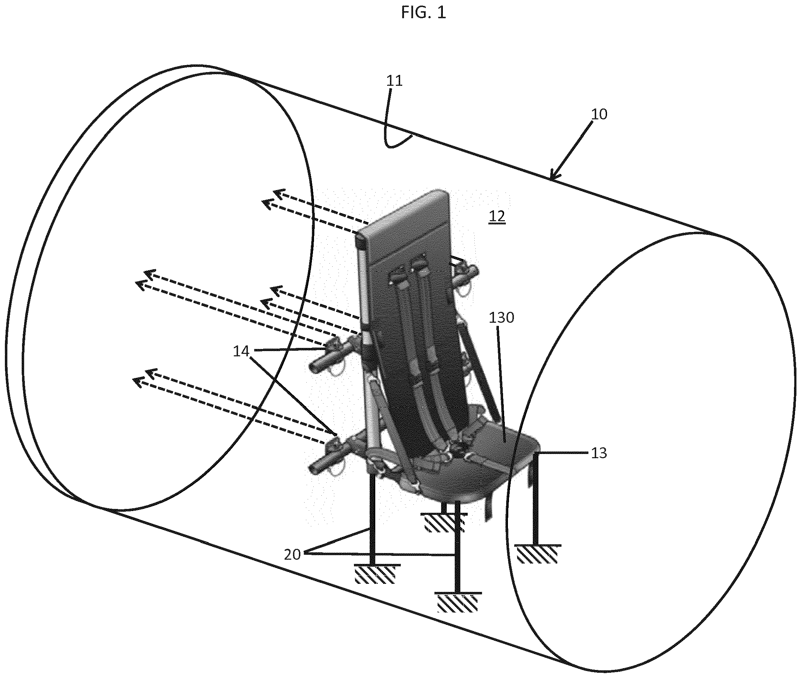

With reference to FIG. 1, an energy attenuation system 10 is provided for use in an aircraft, such as a helicopter, for example. The energy attenuation system 10 includes a housing 11, which is formed to define an interior 12 that may be provided as a cockpit or a cabin that can accommodate one or more pilots or operators and, in some cases, one or more passengers. The energy attenuation system 10 further includes a crusher element 13, which may include or be provided as a seat 130 or another suitable feature on which a pilot, operator or passenger can sit, and rivets 14. The rivets 14 are disposed to support the crusher element 13 within the interior 12 of the housing 11. The rivets 14 are designed to survive a certain gravitational loading incident, such as when a pilot's body accelerates downwardly into the seat 130 of the crusher element up to about 13-14.5 Gs (i.e., 13-14.5 times the acceleration of gravity). The energy attenuation system 10 also includes at least one collapsible structure 20. The at least one collapsible structure 20 is a single use feature and is disposed to deformably support and to decelerate the crusher element 13 within the interior 12 of the housing 11 following failures of the rivets 14.

That is, when the pilot's body accelerates downwardly into the seat 130 of the crusher element 13 with an acceleration that is greater than about 13-14.5 Gs, the rivets 14 fail due to shearing and the crusher element 13 begins to accelerate toward the housing 11. The at least one collapsible structure 20 acts to slow the acceleration of the crusher element 13 or to decelerate the crusher element 13 by deformably collapsing so as to remove or attenuate the energy of the crusher element 13. In accordance with embodiments and, as will be described below, the at least one collapsible structure 20 may be configured to collapse at successive longitudinal portions in response to correspondingly successive compressive forces applied by the crusher element 13 following the failures of the rivets 14.

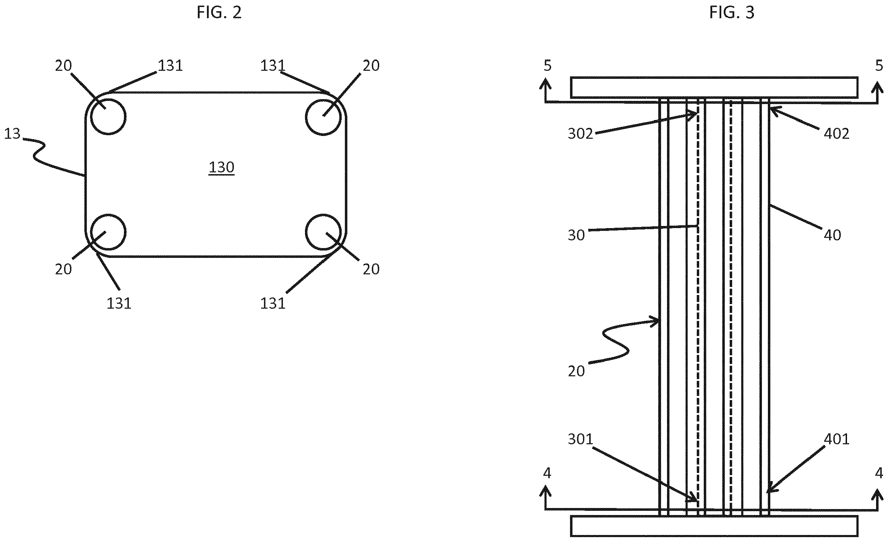

With reference to FIG. 2 and, in accordance with embodiments, the energy attenuation system 10 of FIG. 1 may include multiple collapsible structures 20 with at least one at each corner 131 of the crusher element 13. In such cases, the orientations of each of the collapsible structures 20 is substantially uniform and each collapsible structure 20 bears a substantially equal amount of weight of the crusher element 13. As such, the deformable collapse of each of the collapsible structures 20 is consistent and the crusher element 13 remains in an original orientation as its energy is attenuated (i.e., the crusher element 13 does not tilt or, roll or fall over).

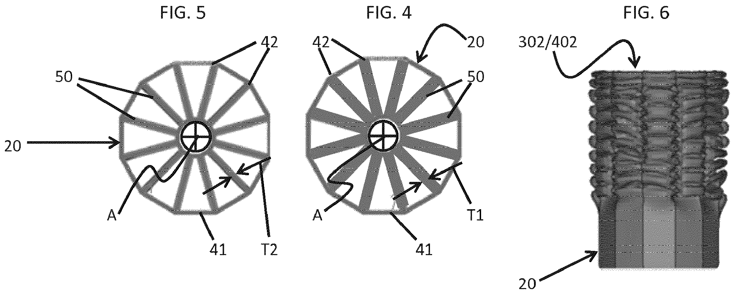

With reference to FIGS. 3-5, each collapsible structure 20 includes an elongate hub 30, an elongate exterior skin 40 that surrounds the elongate hub 30 and a plurality of elongate spokes 50 (see FIGS. 4 and 5). Each elongate spoke 50 extends radially outwardly from an exterior surface of the elongate hub 30 to an interior surface of the elongate exterior skin 40 and is tapered along a length thereof. The elongate hub 30, the elongate exterior skin 30 and each of the plurality of spokes 50 may be symmetric about a central longitudinal axis A (see FIGS. 4 and 5) of the elongate hub 30, each elongate spoke 50 may be substantially uniformly distant from neighboring elongate spokes 50 about the elongate hub 30 and the elongate exterior skin 40 may take the form of a circular element or a polygonal element 41 (see FIGS. 4 and 5). In the latter case, the polygonal element 41 may be defined such that each vertex 42 is provided at a location at which the elongate exterior skin 40 is connected to a distal edge of a corresponding one of the elongate spokes 50.

As shown in FIG. 3 the elongate hub 30 has a first end 301 that is proximate to the housing 11 and a second end 302 that is opposite the first end 301 and proximate to the crusher element 13 and the elongate exterior skin 40 has a first end 401 corresponding to the first end 301 of the elongate hub 30 and a second end 402 corresponding to the second end 302 of the elongate hub 30. Each elongate spoke 50 is tapered along respective lengths of the elongate hub 30 and the elongate exterior skin 40.

That is, as shown in FIGS. 4 and 5, at the respective first ends 301 and 401 of the elongate hub 30 and the elongate exterior skin 40, the elongate spokes 50 have a first thickness T1 (see FIG. 4) and, at the respective second ends 302 and 402 of the elongate hub 30 and the elongate exterior skin 40, the elongate spokes 50 have a second thickness T2. In accordance with embodiments, the second thickness T2 may be smaller than the first thickness T1 such that each elongate spoke 50 is thickest at the respective first ends 301 and 401 of the elongate hub 30 and the elongate exterior skin 40 and each elongate spoke 50 is thinnest at the respective second ends 302 and 402 of the elongate hub 30 and the elongate exterior skin 40. In accordance with further embodiments, the first thickness T1 may be about 0.1" and the second thickness T2 may be about 0.06".

In accordance with still further embodiments, the tapering of each elongate spoke 50 may be is uniform, smooth and/or continuous along the respective lengths of the elongate hub 30 and the elongate exterior skin 40.

The tapering of the elongate spokes 50 will result in varying stiffness along the length of each collapsible structure 20. For example, the top of the collapsible structure 20 (i.e., the first ends 301 and 401) will have a minimum stiffness and the bottom of the collapsible structure 20 (i.e., the second ends 302 and 402) will have a maximum stiffness. This varying stiffness will help in achieving variable energy absorption of various occupants ranging from those in the 5th percentile occupant size to those in the 95th percentile.

With reference to FIG. 6, which illustrates a deformation of the collapsible structure 20 at the top (i.e., the first ends 301 and 401), complete kinetic energy is absorbed by the collapsible structure 20 through plastic deformation. As such, a stroke length of the energy absorption system 10 may be is significantly reduced (e.g., to 1.06") as compared to current wire bender type energy absorption devices that tend to have stroke lengths on the order of 8". Correspondingly, a weight of the collapsible structure 20 may be reduced to about 0.35 lbs as compared to 1.38 lbs of the wire bender type systems.

The energy absorption system 10 described herein can be packaged in various applications, such as helicopter seating systems with the crusher elements 13 being arranged in telescopic tubes of the buckets of the seating systems and the collapsible structure(s) accommodated in fixed bases.

The collapsible structure 20 described herein as having varying stiffness based energy attenuation capabilities for use in an energy absorption system 10 may significantly lower stroke length and weight as compared to existing wire bender designs and can be altered or customized for particular instances. In addition, in an event the collapsible structure 20 is produced using additive manufacturing techniques, performance characteristics thereof could be made predictable and consistent.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A collapsible structure, comprising:
a hub;
an exterior skin surrounding the hub; and
a plurality of spokes extending outwardly from the hub to the exterior skin, each spoke being tapered along a length thereof.

2. The collapsible structure according to claim 1, wherein the hub, the exterior skin and the plurality of spokes are symmetric about a central longitudinal axis of the hub.

3. The collapsible structure according to claim 1 or 2, wherein each spoke is uniformly distant from neighboring spokes about the hub.

4. The collapsible structure according to claim 1, 2 or 3, wherein the exterior skin is polygonal with each vertex being connected to a spoke.

5. The collapsible structure according to any preceding claim, wherein:
the hub is an elongate hub with a first end and a second end opposite the first end,
the exterior skin is an elongate exterior skin with first and second ends corresponding to the first and second ends of the elongate hub, and
each spoke is tapered along respective lengths of the elongate hub and the elongate exterior skin.

6. The collapsible structure according to claim 5, wherein the tapering of each spoke is uniform along the respective lengths of the elongate hub and the elongate exterior skin.

7. The collapsible structure according to claim 5 or 6, wherein:
each spoke is thickest at the respective first ends of the elongate hub and the elongate exterior skin; and
each spoke is thinnest at the respective second ends of the elongate hub and the elongate exterior skin.

8. The collapsible structure according to claim 5, 6 or 7, wherein:
each spoke has a thickness of about 0.1 inches (2.54 mm) at the respective first ends of the elongate hub and the elongate exterior skin, and
each spoke has a thickness of about 0.06 inches (1.524 mm) at the respective second ends of the elongate hub and the elongate exterior skin.

9. An energy attenuation system, comprising:
a housing;
a crusher element;
rivets disposed to support the crusher element within the housing; and
at least one collapsible structure as claimed in any preceding claim and disposed to deformably support the crusher element within the housing following failures of the rivets.

10. The energy attenuation system according to claim 9, wherein the housing comprises an aircraft housing, the crusher element comprises a seat and failures of the rivets occur in an event a body in the seat experiences an acceleration of about 13-14.5 Gs.

11. The energy attenuation system according to claim 10, wherein the at least one collapsible structure is a single use feature.

12. The energy attenuation system according to claim 10 or 11, wherein the at least one collapsible structure comprises multiple collapsible structures at corners of the seat.

13. The energy attenuation system according to any of claims 9 to 12, wherein:
the first end of the hub is proximate to the housing and the second end of the hub is proximate to the crusher element.
